# EUROPÄISCHE PATENTSCHRIFT

(11) **EP 1 378 693 B1**
(45) Veröffentlichungstag und Bekanntmachung des Hinweises auf die Patenterteilung: **08.06.2005**
(21) Anmeldenummer: 03076870.9
(22) Anmeldetag: 17.06.2003
(51) Int. Cl.: F16K 1/34

(54) **Heizkörperventil**
Radiator valve
Soupape de radiateur

(30) Priorität: 05.07.2002 DE 10230343
(43) Veröffentlichungstag der Anmeldung: 07.01.2004
(73) Patentinhaber: Danfoss A/S, 6430 Nordborg (DK)
(72) Erfinder: Sorensen, Soren Holm, 8464 Galten (DK)

(56) Entgegenhaltungen:
- EP-A- 1 217 270
- DE-A- 4 325 738
- US-A- 2 548 239
- US-A- 3 729 025

## Beschreibung

Die Erfindung betrifft ein Heizkörperventil mit einem Ventilelement, das in einer Schließstellung an einer Ventilsitzanordnung anliegt und zum Öffnen von der Ventilsitzanordnung weg bewegbar ist, wobei die Ventilsitzanordnung mehrere Ventilsitze aufweist.

Ein derartiges Heizkörperventil wurde bereits in Dokument EP 1 217 270 offenbart.

Derartige Heizkörperventile sind allgemein bekannt und werden in oder an den meisten Heizkörpern eingesetzt. Sie sind vielfach thermostatisch betätigbar, d.h. durch einen Thermostatkopf oder -aufsatz. Das Ventilelement, das auch als "Ventilkegel" bezeichnet wird, wird durch eine Feder in Öffnungsrichtung, d.h. von der Ventilsitzanordnung weg, vorgespannt. Der Thermostatventilaufsatz oder eine andere Betätigungseinrichtung übt in Abhängigkeit von einer Raumtemperatur eine Schließkraft auf das Ventilelement aus. Diese Schließkraft kann, wenn sie die Kraft der Feder in ausreichendem Maße übersteigt, dazu führen, daß das Ventilelement an der Ventilsitzanordnung anliegt. Dadurch wird der weitere Zufluß von Heizflüssigkeit in den Heizkörper unterbrochen.

Die äußeren Abmessungen eines derartigen Heizkörperventils sind begrenzt. Hierbei spielen beispielsweise die Anschlußmaße der Heizkörper eine Rolle, aber auch Platzverhältnisse in der Umgebung des Heizkörpers. Dies führt dazu, daß der äußere Durchmesser des Ventils eine vorbestimmte Größe nicht überschreiten kann. Auch die Hubhöhe des Ventilelements relativ zur Ventilsitzanordnung ist im allgemeinen begrenzt. Dies liegt unter anderem daran, daß der Thermostatventil-Aufsatz über einen vorbestimmten Temperaturbereich nur eine entsprechend vorbestimmte Längenänderungen herbeiführen kann.

Der Erfindung liegt die Aufgabe zugrunde, bei unveränderten Außenabmessungen einen großen Durchfluß zu ermöglichen.

Diese Aufgabe wird bei einem Heizkörperventil der eingangs genannten Art dadurch gelöst, daß jeder Ventilsitz mit seiner Innenseite eine Begrenzung für eine Öffnung bildet, wobei an der Außenseite jedes Ventilsitzes auch in der Schließstellung des Ventilelements ein Freiraum Zwischen dem Ventilelement und einer dem Ventilelement zugewandten Oberfläche vorgesehen ist und das Heizhörperventil eine Voreinstellung aufweist.

Mit dieser Ausgestaltung wird die Schließlinie, also die Berührungslinie zwischen dem Ventilelement und der Ventilsitzanordnung vergrößert gegenüber einer Ausgestaltung, bei der der Ventilsitz nur eine einzige Öffnung umgibt. Dies gilt in gewissen Grenzen auch dann, wenn die Öffnungen bei der vorgeschlagenen Ventilsitzanordnung kleiner sind als die Öffnung in einem herkömmlichen Heizkörperventil. Damit steht bei einem Abheben des Ventilelements von der Ventilsitzanordnung eine größere Querschnittsfläche zur Verfügung, über die die Heizflüssigkeit strömen kann. Die Querschnittsfläche ergibt sich aus dem Produkt von Hubhöhe, d.h. Abstand zwischen Ventilelement und Schließlinie, und Länge der Schließlinie. Dies setzt allerdings voraus, daß auf der Außenseite der Ventilsitze jeweils ein Freiraum vorhanden ist, durch den die Heizflüssigkeit ungedrosselt fließen kann. Wenn dieser Freiraum bereits in der Schließstellung des Ventilelements vorhanden ist, dann bleibt er auch dann erhalten, wenn das Ventilelement um eine kleine Entfernung von der Ventilsitzanordnung, d.h. den Ventilsitzen, abgehoben wird. Die Vergrößerung der Schließlinie durch Verwendung von mehreren Öffnunggen führt also tatsächlich zu einer Vergrößerung eines Abströmquerschnitts, durch den die Flüssigkeit ungedrosselt fließen kann. Die Größe der Öffnungen an sich spielt für das Strömungsverhalten der Heizungsflüssigkeit durch das Ventil nur eine untergeordnete Rolle. Wichtig ist der Abströmquerschnitt, der sich zwischen dem Ventilelement und den Ventilsitzen ergeben kann.

Vorzugsweise erfolgt ein Übergang von einer Schließlinie des Ventilsitzes in den Freiraum stufenfrei. Damit werden sprungartige Änderungen im Abströmwidertand vermieden. Dies führt zu einem verbesserten Geräuschverhalten.

Hierbei ist besonders bevorzugt, daß der Übergang abgerundet ist. Die durch den Spalt zwischen Ventilelement und den Ventilsitzen fließende Flüssigkeit wird dann auf günstige Weise geführt, so daß keine sprungartigen Druckunterschiede auftreten können, die wiederum zu einem Geräusch führen könnten. Diese Ausbildung ist allerdings nicht zwingend. Alternativ könnte man den Übergang auch scharfkantig ausbilden.

Bevorzugterweise hängen die Freiräume von allen Ventilsitzen zusammen. Damit ist man nicht mehr darauf angewiesen, die Ventilsitze in einer vorbestimmten Orientierung zum Ventilelement hin anzuordnen. Die Heizflüssigkeit kann nach dem Überqueren der Schließlinie in den Freiraum abfließen und sich dann mit Heizflüssigkeit von anderen Öffnungen vereinigen. Zusätzliche Hindernisse werden nicht aufgebaut.

Vorzugsweise ist die Ventilsitzanordnung auf einem Trägerkörper angeordnet, durch den die Öffnungen hindurch gehen, wobei die Ventilsitze gegenüber einer dem Ventilelement zugewandten Oberfläche des Trägerkörpers mit einem vorbestimmten Abstand angeordnet sind. Dies ist eine relativ einfache Möglichkeit, auf der Außenseite der Ventilsitze den benötigten Freiraum zur Verfügung zu stellen. Der Freiraum wird im Prinzip gebildet durch den Abstand zwischen der Ebene, in der die Ventilsitze angeordnet sind, und der Ebene, die durch die Oberfläche des Trägerkörpers gebildet wird. Der Trägerkörper wird hier so genannt, weil er die Ventilsitzanordnung trägt. Er muß nicht als eigenständiges Teil ausgebildet sein, auch wenn dies von Vorteil ist, sondern er kann auch Teil eines Gehäuses sein, indem die entsprechenden Öffnungen eingebracht werden.

Vorzugsweise sind die Ventilsitze an Stirnseiten von rohrartigen Stutzen angeordnet, die von dem Trägerkörper hervorstehen. Dies ist eine relativ einfache Ausbildung, die Ventilsitze mit der Entfernung von der Oberfläche des Trägerkörpers anzuordnen. Die Flüssigkeit fließt dann durch die rohrartigen Stutzen bis zu den Ventilsitzen und kann, wenn das Ventilelement von den Ventilsitzen abgehoben ist, auf der Außenseite der rohrartigen Stutzen abfließen. Natürlich müssen hierzu zwischen den rohrartigen Stutzen durch Abstände zwischen den Stutzen gebildete Freiräume vorhanden sein, durch die die Flüssigkeit abfließen kann.

Bevorzugterweise weist der Trägerkörper in seiner radialen Mitte eine Vertiefung auf und zwar auf der dem Ventilelement zugewandten Oberfläche. In diese Vertiefung kann dann ein Fortsatz des Ventilelements eintauchen, der über die Schließfläche des Ventilelements übersteht. Ein derartiger Fortsatz kann beispielsweise durch ein Befestigungselement gebildet werden, mit dem eine Dichtungsscheibe des Ventilelements an einer Spindel befestigt ist. Die Vertiefung hat den Vorteil, daß die Länge der rohrartigen Stutzen nicht so lang sein muß, wie die Länge des über das Ventilelement vorstehenden Vorsprungs. Man kann daher die Entfernung zwischen den Ventilsitzen und der Oberfläche des Trägerkörpers im Hinblick auf eine günstige Strömung hin dimensionieren.

Vorzugsweise ist der Trägerkörper als Einsatz ausgebildet. Man kann ihn also unabhängig vom Rest des Ventils fertigen, beispielsweise aus Kunststoff, wo hingegen andere Bestandteile des Ventils aus Metall, wie Messing, gefertigt sein können.

Bevorzugterweise sind die Öffnungen in Umfangsrichtung der Ventilsitzanordnung gleichförmig verteilt. Dies hat den Vorteil, daß auch das Ventilelement gleichförmig beaufschlagt wird, wenn es von den Ventilsitzen abgehoben wird. Eine ungleichförmige Beaufschlagung des Ventilelements könnte auf Dauer das Risiko einer Undichtigkeit des Ventils mit sich bringen.

Bevorzugterweise ist das Ventilelement in einem Gehäuse bewegbar, das zumindest im Bereich des Freiraums als Rohr ausgebildet ist, wobei das Rohr mehrere Durchbrechungen in seiner Wand aufweist. Das Gehäuse des Ventils, das unter anderem zum Festhalten des die Ventilsitze aufnehmenden Trägerkörpers dient, umschließt den Bereich, in dem sich das Ventilelement bewegt. Dadurch wird eine relative große mechanische Stabilität erreicht. Andererseits sieht man mehrere Durchbrechungen vor, durch die die Heizflüssigkeit abfließen kann. Durch die Verwendung eines rohrartigen Gehäuses wird also der Abfluß von Heizflüssigkeit nicht behindert.

Hierbei ist besonders bevorzugt, daß die Summe der Querschnitte der Durchbrechungen größer ist als die Summe der Flächen der zwischen den Durchbrechungen verbleibenden Wandabschnitte. Damit wird der größtmögliche Strömungsquerschnitt für die abströmende Heizungsflüssigkeit freigegeben.

Die Erfindung wird im folgenden anhand einer bevorzugten Ausgestaltung in Verbindung mit der Zeichnung näher beschrieben. Hierin zeigen:
- Fig. 1: eine Außenansicht eines Heizkörperventils,
- Fig. 2: eine Schnittansicht durch ein Heizkörperventil und
- Fig. 3: einen Trägerkörper mit Ventilsitzen.

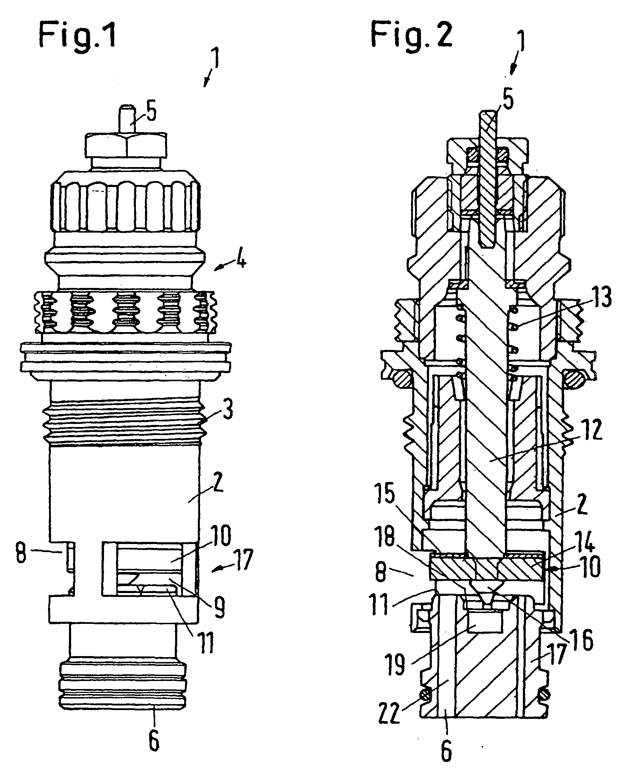

Fig. 1 zeigt ein Heizkörperventil 1 von außen. Das Heizkörperventil weist ein rohrförmiges Gehäuse 2 auf mit einem Außengewinde 3, mit dem das Heizkörperventil 1 in einen nicht näher dargestellten Heizkörper eingeschraubt werden kann, und einer Anschlußgeometrie 4 zur Befestigung eines Thermotatventil-Aufsatzes, der ebenfalls nicht weiter dargestellt ist. Die eigentliche Betätigung des Heizkörperventils erfolgt über einen Stößel 5, der mehr oder weniger weit in das Gehäuse 2 eingedrückt werden kann.

An seinem unteren Ende weist das Heizkörperventil einen Einlaß 6 auf. Ein Auslaß 7 ist gebildet durch mehrere Öffnungen 8, 9 in der Wand des Gehäuses 2. Diese Öffnungen 8, 9 sind in Umfangsrichtung gleichmäßig verteilt. Von den insgesamt vorhandenen drei Öffnungen sind in Fig. 1 zwei erkennbar.

Durch die Öffnungen 8, 9 hindurch erkennbar ist ein Ventilelement 10 und eine Ventilsitzanordnung 11. Das Ventilelement 10 ist, wie dies aus Fig. 2 zu erkennen ist, an einer Betätigungsstange 12 (oder Spindel) befestigt, die wiederum in Wirkverbindung mit dem Stößel 5 steht. Eine Öffnungsfeder 13 ist vorgesehen, die das Ventilelement 10 von der Ventilsitzanordnung 11 wegzieht. Durch ein Drücken auf den Stößel 5 kann das Ventilelement 10 hingegen zur Anlage an die Ventilsitzanordnung 11 gebracht werden. Dies ist an sich bekannt und wird daher im folgenden nicht näher erläutert.

Das Ventilelement 10 weist eine Dichtscheibe 14 aus einem elastomeren Material auf, die von einer Stützscheibe 15 auf der der Ventilanordnung 11 abgewandten Seite unterstützt wird. Eine Schraube, von der ein Kopf 16 dargestellt ist, dient zur Befestigung der Dichtscheibe 14 an der Betätigungsstange 12. Andere Befestigungsmöglichkeiten, beispielsweise ein Festklemmen oder Nieten, sind natürlich ebenfalls möglich.

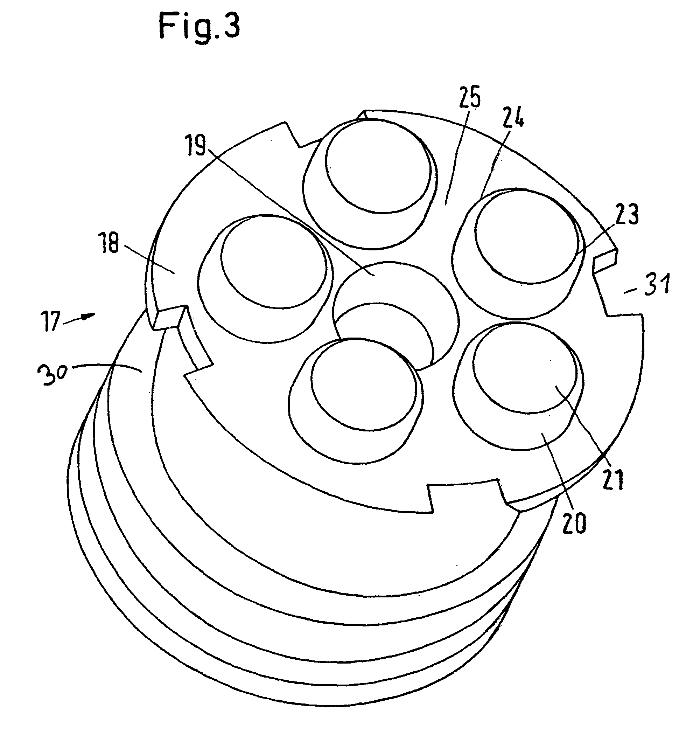

Die Ventilsitzanordnung 11 ist an einem als Trägerkörper 17 ausgebildeten Einsatz angebracht, der in das Gehäuse eingesetzt ist. Der Trägerkörper 17 ist in Fig. 3 vergrößert und perspektivisch dargestellt. Er weist eine dem Ventilelement 10 zugewandte Oberfläche 18 auf, in deren Mitte eine Vertiefung 19 angeordnet ist, die zur Aufnahme des Kopfes 16 dient.

Aus der Oberfläche 18 ragen insgesamt fünf rohrförmige Stutzen 20 hervor, die jeweils Öffnungen 21 umgeben. Jede Öffnung 21 steht in Verbindung mit einem Kanal 22, der den Trägerkörper 17 durchsetzt. An der Stirnseite der Stutzen 20 ist jeweils ein Ventilsitz 23 ausgebildet. Der Ventilsitz 23 begrenzt an seiner Innenseite die Öffnung 21. Nach außen sind die Ventilsitze 23 abgerundet, d.h. sie weisen eine Rundung 24 auf. Die Anzahl von 5 Stutzen ist beispielhaft gewählt. Im Prinzip reichen für eine größere Ventilkapazität zwei Ventilsitze aus. Eine größere Anzahl ist jedoch von Vorteil.

Bei Ventilen mit herkömmlichen Abmessungen wird eine Obergrenze wahrscheinlich bei 10 Ventilsitzen liegen.

Durch die Verwendung der rohrförmigen Stutzen 20 haben die Ventilsitze 23 einen vorbestimmten Abstand zur Oberfläche 18 des Trägerkörpers 17. Der Einsatz trägt die Ventilsitze und wird deswegen auch als "Trägerkörper" bezeichnet.

Die einzelnen Stutzen 20 haben in allen Richtungen einen gewissen Abstand zueinander, so daß zwischen den Stutzen ein Freiraum 25 gebildet ist. Die Freiräume 25 zwischen allen Stutzen 20 gehen ineinander über, d.h. es bestehen keine Strömungshindernisse beim Übergang von einem Freiraum zu einem anderen. Die gleichmäßige Verteilung der Stutzen 20 ist von Vorteil, aber nicht zwingend. Man kann auch andere, ungleichmäßige Verteilungen wählen, solange die Freiräume erhalten bleiben.

Der Freiraum 25 bleibt auch erhalten, wenn das Ventilelement 10 an den Ventilsitzen 23 anliegt. Er wird dann gebildet durch den durch die Stutzen 20 freigehaltenen Raum zwischen dem an den Ventilsitzen 23 anliegenden Ventilelement 10 und der Oberfläche 18 des Trägerkörpers 17. Sobald dann das Ventilelement 10 von den Ventilsitzen 23 abgehoben wird, kann die aus den Öffnungen 21 strömende Flüssigkeit sofort abfließen und zwar entweder sofort radial nach außen, bezogen auf die Oberfläche 18, oder über die Rundungen 24 auch radial nach innen und später durch den Freiraum 25 nach außen. Da die Ventilsitze 23 alle in der gleichen Ebene liegen, werden sie auch praktisch gleichzeitig vom Ventilelement 10 freigegeben.

Bei dem dargestellten Heizkörperventil 1 wird die Kapazität bestimmt durch die Länge einer Schließlinie zwischen dem Ventilelement 10 und der Ventilsitzanordnung 11. Durch die Aufteilung der Ventilsitzanordnung 11 in viele einzelne Ventilsitze 23 läßt sich eine Vergrößerung der Schließlänge, d.h. der Länge einer Schließlinie, gegenüber einem Ventil erreichen, das bei ansonsten unveränderten Außendurchmessern nur eine einzige Öffnung aufweist, die von einem einzelnen Ventilsitz umgeben ist.

Würde man eine Öffnung verwenden, die den gleichen Außendurchmesser wie ein Kreis aufweist, der alle fünf Öffnungen 21, umschließt, dann wäre bei der dargestellten Ausführungsform die Schließlänge um etwa 37 % größer. Da die Flüssigkeit, die über die Ventilsitze 23 übertritt, sofort in den Freiraum 25 abfließen kann, besteht nach dem Überfließen des Ventilsitzes 23 kein weiteres Strömungshindernis mehr. Im Umfang der Trägerkörper 17 ist, wie aus Fig. 3 hervorgeht, eine Umfangsnut 30 angeordnet, die über vier Ausnehmungen 31 mit dem Freiraum 25 in Verbindung steht und für den Abfluß der Flüssigkeit zur Verfügung steht. Damit kann eine verbesserte Abströmung erreicht werden. Auch hier läßt sich eine größere oder kleinere Anzahl als vier Ausnehmungen verwenden.

Da gleichzeitig im Gehäuse 2 mehrere Öffnungen 8, 9 vorgesehen sind, deren Strömungsquerschnitt ebenfalls sehr groß gewählt ist, wird die einzige effektive Drosselstelle durch das Zusammenwirken zwischen dem Ventilelement und der Ventilsitzanordnung 11 gebildet.

Bei der vorliegend dargestellten Ausführungsform ist das Ventil mit einer Voreinstellung ausgerüstet, entweder mit Hilfe einer Drosselbuchse, die beispielsweise die Öffnungen 8, 9 mehr oder weniger verschließen kann, oder mit Hilfe einer Hubhöhenbegrenzung.

## Patentansprüche

1. Heizkörperventil mit einem Ventilelement, das in einer Schliessstellung an einer Ventilsitzanordnung anliegt und zum Öffnen von der Ventilsitzanordnung weg bewegbar ist, wobei die Ventilsitzanordnung mehrere Ventilsitze aufweist, **dadurch gekennzeichnet, dass** jeder Ventilsitz (23) mit seiner Innenseite eine Begrenzung für eine Öffnung (21) bildet, wobei an der Aussenseite jedes Ventilsitzes (23) auch in der Schliessstellung des Ventilelements (10) ein Freiraum (25) zwischen dem Ventilelement (10) und einer dem Ventilelement zugewandten Oberfläche (18) vorgesehen ist und das Heizkörperventil eine Voreinstellung aufweist.

2. Ventil nach Anspruch 1, **dadurch gekennzeichnet, daß** ein Übergang von einer Schließlinie des Ventilsitzes (23) in den Freiraum (25) stufenfrei erfolgt.

3. Ventil nach Anspruch 2, **dadurch gekennzeichnet, daß** der Übergang abgerundet ist.

4. Ventil nach einem der Ansprüche 1 bis 3, **dadurch gekennzeichnet, daß** die Freiräume (25) von allen Ventilsitzen (23) zusammenhängen.

5. Ventil nach einem der Ansprüche 1 bis 4, **dadurch gekennzeichnet, daß** die Ventilsitzanordnung (11) auf einem Trägerkörper (17) angeordnet ist, durch den die Öffnungen (21) hindurch gehen, wobei die Ventilsitze (23) gegenüber einer dem Ventilelement zugewandten Oberfläche (18) des Trägerkörpers (17) mit einem vorbestimmten Abstand angeordnet sind.

6. Ventil nach Anspruch 5, **dadurch gekennzeichnet, daß** die Ventilsitze (23) an Stirnseiten von rohrartigen Stutzen (20) angeordnet sind, die von dem Trägerkörper (17) hervorstehen.

7. Ventil nach Anspruch 5 oder 6, **dadurch gekennzeichnet, daß** der Trägerkörper (17) in seiner radialen Mitte eine Vertiefung (19) auf der dem Ventilelement (10) zugewandten Oberfläche (18) aufweist.

8. Ventil nach einem der Ansprüche 5 bis 7, **dadurch gekennzeichnet, daß** der Trägerkörper (17) als Einsatz ausgebildet ist.

9. Ventil nach einem der Ansprüche 1 bis 8, **dadurch gekennzeichnet, daß** die Öffnungen (20) in Umfangsrichtung der Ventilsitzanordnung (11) gleichförmig verteilt sind.

10. Ventil nach einem der Ansprüche 1 bis 9, **dadurch gekennzeichnet, daß** das Ventilelement (10) in einem Gehäuse (2) bewegbar ist, das zumindest im Bereich des Freiraums (25) als Rohr ausgebildet ist, wobei das Rohr mehrere Durchbrechungen (8, 9) in seiner Wand aufweist.

11. Ventil nach Anspruch 10, **dadurch gekennzeichnet, daß** die Summe der Querschnitte der Durchbrechungen (8, 9) größer ist als die Summe der Flächen der zwischen den Durchbrechungen (8, 9) verbleibenden Wandabschnitte.

## Claims

1. Radiator valve with a valve element, bearing on a valve seat arrangement in a closed position and being movable away from the valve seat arrangement for opening, the valve seat arrangement having several valve seats, **characterised in that** the inside of each valve seat (23) forms a limitation of an opening (21), a free space (25) between the valve element (10) and a surface (18) facing the valve element being provided at the outside of each valve seat (23), also in the closed position of the valve element (10), and that the radiator valve has a presetting.

2. Valve according to claim 1, **characterised in that** a transition from a closing line of the valve seat (23) into the free space (25) is infinite.

3. Valve according to claim 2, **characterised in that** the transition is rounded.

4. Valve according to one of the claims 1 to 3, **characterised in that** the free spaces (25) of all valve seats (23) are connected with each other.

5. Valve according to one of the claims 1 to 4, **characterised in that** the valve seat arrangement (11) is located on a support body (17), which is penetrated by the openings (21), the valve seats (23) being located at a predetermined distance in relation to a surface (18) of the support body (17) facing the valve element.

6. Valve according to claim 5, **characterised in that** the valve seats (23) are located on front sides of pipe-like adapters (20), which project from the support body (17).

7. Valve according to claim 5 or 6, **characterised in that** in its radial centre the support body (17) has a recess (19) of the surface (18) facing the valve element (10).

8. Valve according to one of the claims 5 to 7, **characterised in that** the support body (17) is made as an insert.

9. Valve according to one of the claims 1 to 8, **characterised in that** the openings (20) in the circumferential direction of the valve seat arrangement (11) are evenly distributed.

10. Valve according to one of the claims 1 to 9, **characterised in that** the valve element 10 is movable in a housing (2), which has, at least in the area of the free space (25) the shape of a pipe, the pipe having several piercings (8, 9) in its wall.

11. Valve according to claim 10, **characterised in that** the sum of the cross-sections of the piercings (8, 9) is larger than the sum of the surfaces of the wall sections remaining between the piercings (8, 9).

## Revendications

1. Robinet de radiateur comprenant un élément de robinet qui s'applique contre un agencement formant siège de robinet dans une position de fermeture et qui est déplaçable en éloignement de l'agencement formant siège de robinet pour l'ouverture, ledit agencement formant siège de robinet comportant plusieurs sièges de robinet, **caractérisé en ce que** chaque siège de robinet (23) forme avec sa face intérieure une délimitation pour une ouverture (21), et **en ce qu'**il existe sur la face extérieure de chaque siège de robinet (23), également dans la position de fermeture de l'élément de robinet (10), un espace libre (25) entre l'élément de robinet (10) et une surface (18) tournée vers l'élément de robinet, et le robinet de radiateur comporte un réglage préalable.

2. Robinet selon la revendication 1, **caractérisé en ce qu'**il existe une transition continue depuis une ligne de fermeture du siège de robinet (23) vers l'espace libre (25).

3. Robinet selon la revendication 2, **caractérisé en ce que** la transition est arrondie.

4. Robinet selon l'une des revendications 1 à 3, **caractérisé en ce que** les espaces libres (25) de tous les sièges de robinet (23) se tiennent mutuellement.

5. Robinet selon l'une des revendications 1 à 4, **caractérisé en ce que** l'agencement formant siège de robinet (11) est agencé sur un corps porteur (17) à travers lequel passent les ouvertures (21), les sièges de robinet (25) étant agencés à une distance prédéterminée par rapport à une surface (18) du corps porteur (17) tournée vers l'élément de robinet.

6. Robinet selon la revendication 5, **caractérisé en ce que** les sièges de robinet (23) sont agencés au niveau des surfaces frontales de manchons tubulaires (20) qui dépassent depuis le corps porteur (17).

7. Robinet selon l'une ou l'autre des revendications 5 et 6, **caractérisé en ce que** le corps porteur (17) présente dans son milieu en sens radial un renfoncement (19) sur la surface (18) tournée vers l'élément de robinet (10).

8. Robinet selon l'une des revendications 5 à 7, **caractérisé en ce que** le corps porteur (17) est réalisé sous forme d'insert.

9. Robinet selon l'une des revendications 1 à 8, **caractérisé en ce que** les ouvertures (20) sont réparties de façon régulière en direction périphérique de l'agencement formant siège de robinet (11).

10. Robinet selon l'une des revendications 1 à 9, **caractérisé en ce que** l'élément de robinet (10) est déplaçable dans un boitier (2) qui est réalisé sous forme de tube au moins dans la région de l'espace libre (25), et **en ce que** le tube comporte plusieurs traversées (8, 9) dans sa paroi.

11. Robinet selon la revendication 10, **caractérisé en ce que** la somme des sections des traversées (8, 9) est supérieure à la somme des surfaces des tronçons de paroi qui demeurent entre les traversées (8, 9).
